# EUROPEAN PATENT APPLICATION

(11) **EP 4 803 567 A1**
(43) Date of publication of application: **09.09.2026**
(21) Application number: 24874131.6
(22) Date of filing: 03.10.2024
(51) Int. Cl.: C08K 3/01, C08K 7/00, C08K 9/00, C08J 5/10

(54) **ABSORBENT POLYMER MATERIAL, FILLER AND CLADDING COMPRISING SAME**

(30) Priority: 06.10.2023 ES 202330839
(71) Applicant: Micromag 2000, S.L., 28925 Alcorcón Madrid (ES)
(72) Inventor: RODRIGUEZ CALVETE, Javier, 28240 Madrid (ES); CALVO ROBLEDO, Javier, 28224 Madrid (ES); ABERTURAS LOPEZ, Susana, 28009 Madrid (ES); CORTINA BLANCO, Daniel, 28250 Madrid (ES); HERNANDO GRANDE, Antonio, 28023 Madrid (ES)
(74) Representative: Elzaburu S.L.P.
(86) International application number: PCT/ES2024/070602
(87) International publication number: WO 2025/074021

(57) **Abstract**

An absorbent polymeric material comprising a polymeric foam and inclusions of carbon fibre filaments configured to absorb electromagnetic radiation, and filler and coating comprising the same.

## Description

### Field of the Invention

The present invention relates to absorbent materials. In particular, it relates to a polymeric material for absorbing electromagnetic radiation.

### Background

At present, composite material structures capable of absorbing and dissipating the power of electromagnetic radiation are known in the art. They are mainly used as a coating for aerial, aquatic and terrestrial platforms, as well as for fixed terrestrial installations, in order to prevent their identification by radar or to mitigate their interference with radioelectric systems. The operation of a radar is based on the fact that electromagnetic radiation emitted by a source undergoes reflection on objects upon which it impinges. This reflection is processed by the radar system such that, by quantifying the time elapsed between emission and reception of the signal and the magnitude of the received echo, the distance and the size of the target are determined, respectively.

The structures currently used as absorbents consist of materials exhibiting a high variability in thickness, number of layers or weight.

However, they only satisfy some of the electromagnetic and/or mechanical characteristics required for their use. In this regard, absorbent materials designed and constructed, for example, for use in measurement laboratories or anechoic chambers, exhibit a wide frequency range within which the power of electromagnetic radiation is attenuated and a considerable absorption within the attenuation band, but provide limited performance from a mechanical standpoint, in terms of weight, large thickness, low tensile strength and fragility.

Additionally, materials for military use, for which good structural characteristics are required, are characterised by limited performance in terms of electromagnetic characteristics, such as the attenuation band and the absorption of electromagnetic radiation within said attenuation band.

### Summary

The object of the present invention is to provide a solution relating to a polymeric material for absorbing electromagnetic radiation, thereby solving the problems set out above.

Specifically, in a first embodiment, there is provided an absorbent polymeric material comprising a polymeric foam and inclusions of metallic filaments or carbon fibre configured to absorb electromagnetic radiation.

According to the present invention, a dual phenomenon occurs. On the one hand, pure absorption of the incident wave associated with the losses described is achieved and, on the other hand, destructive interference occurs due to the cancellation of the wave reflected at the surface and at the bottom of the material.

In this manner, the material is configured for application in the following uses:
- inhibiting or reducing the reflectivity of objects with respect to detection by radar systems;
- eliminating undesired echoes in fixed radar systems in infrastructures (airports);
- eliminating coupling problems between antennas;
- reducing standing waves in enclosures with electronic circuitry and telecommunication systems;
- anechoic chambers;
- integration into antenna radomes for band-pass filtering of signals.

In a second embodiment, a material comprising polymeric foams and metallic or carbon fibre inclusions may serve as a filler, such that the detection of a metallic or reflective material is inhibited. For example, in the aeronautical sector, the use of a filler as described enables the inhibition of the detection of a metallic or reflective material within the fuselage.

The characteristics described for the absorbent material are also applicable to the filler comprising it.

Unlike the material described above, the filler is a non-structural configuration. That is, unlike the material, the filler lacks the technical characteristics and structural compatibility inherent to a structural element, which serve to provide strength and rigidity to the resulting final part.

In a third embodiment, an absorbent coating is provided. Said absorbent coating is formed by a composite material comprising glass fibre and resin as a structural element, and further comprises an absorbent material as described above.

Therefore, the absorbent polymeric material according to the present invention may be arranged in a structural configuration or may be associated, as a filler, with a structural element, thereby giving rise to an absorbent coating. Depending on the intended purpose, the application of this solution may be carried out according to one or another embodiment. Regardless of the embodiment employed, the present invention enables the inhibition of the detection of a metallic or reflective material covered by said absorbent polymeric material. For example, in the aeronautical sector, the use of a filler as described enables the inhibition of the detection of a metallic or reflective material within the fuselage.

### Detailed description

In a first embodiment, there is provided an absorbent polymeric material comprising a polymeric foam and inclusions of metallic filaments or carbon fibre configured to absorb electromagnetic radiation.

In a particular embodiment, the polymeric foam forms a structural core. Said structural core corresponds to one of the layers of a multilayer structural element. In this manner, the inclusions of metallic filaments or carbon fibre configured to absorb electromagnetic radiation are arranged in at least one of the layers of the structural element.

In an even more particular embodiment, the at least one structural layer comprising the inclusion of filaments, whether metallic or carbon fibre, corresponds to the polymeric foam structural core. This structural core may be integrated into sandwich-type composite architectures, between glass fibre and carbon fibre laminates. It should be noted that carbon fibre cannot be arranged as an outer layer of the multilayer structural material. Carbon fibre is required to be arranged in an inner layer, since otherwise the incident radiation would not pass through the material.

In a particular embodiment, a flat metallic reference surface may be used beneath the foam in order to promote destructive interference at selected frequencies. Additionally, or alternatively, a sawtooth-profile surface may be used to promote non-normal incidence at the surface (and/or to cause multiple reflections), or to avoid a reference plane by taking advantage of the low reflectivity of the material.

The filaments incorporated into the core of the structure impart high dielectric losses to the material without substantially affecting the real part of the original permittivity. As a result, the incident wave reduces its energy as it propagates through the material.

The foam used for the absorbent polymeric material is a polymeric foam, which may be derived from different chemical families. Preferably, a foam having a high density of bonds is used, obtained by combining different types of resins. By way of a non-limitative example, polyurethane, epoxy, polymethacrylimide (PMI), and bismaleimide (BMI) foams, among others, may be used. Preferably, the foam has a density of between 80 and 200 kg/m³.

This formulation, with an appropriate post-curing cycle, imparts high hardness and a high glass transition temperature (Tg) to the material, which may reach up to 195°C according to calorimetric analyses performed. These properties make the material suitable for use in autoclave curing processes at 180°C, a standard in the aeronautical and defence sectors. Depending on the curing agent, the entrainment or sedimentation of the additives may be enhanced, thereby achieving a gradient in fibre concentration, which is advantageous for obtaining pure absorption through dielectric losses.

Specifically, the metallic or carbon fibre filaments used for the inclusions may have a structure with or without sizing, that is, with or without a coating.

Additionally, in the case of carbon fibre filaments, they preferably have a diameter of approximately 7 micrometres (µm) and a length of between 0.1 and 50 mm. In a particular embodiment, the length is between 1 and 50 mm, preferably between 3 and 30 mm, and more preferably between 5 and 25 mm. On the other hand, the concentration of filaments ranges from 0.01 to 10% by weight of the foam, preferably from 0.01 to 0.08%, depending on the final density of the material. In this manner, in a preferred embodiment, the carbon fibre filaments may have a ratio between filament length and wavelength (λ/l) of between 1 and 100, and an attenuation of approximately 15 dB.

Examples of metallic filaments include iron- or cobalt-based microwires and aluminium-coated glass fibres, among others. In the case of metallic filaments, they preferably have a diameter of approximately 10 to 50 micrometres (µm) and a length of between 0.1 and 8 mm, preferably between 1 and 4 mm.

As a result of this configuration, electromagnetic radiation is absorbed over a frequency range from 500 MHz to several tens of GHz, for example up to 40 GHz or higher. The frequency range to be absorbed is determined by the thickness of the material used. Thus, by way of non-limitative examples, with a polymeric foam thickness of approximately 5 mm, the Ku band is absorbed; with a thickness of approximately 7.5 mm, the X band is absorbed; and with a thickness of approximately 24 mm, the L band may be absorbed. For broadband absorption, thicknesses greater than 20 mm of the absorbent polymeric material are used. Therefore, the thickness of the polymeric foam is in the range of 5 to 50 mm.

However, these thicknesses are determined by the amount and nature of the additive (metallic filament or carbon fibre) associated therewith. That is, the thickness may be reduced or increased depending on the concentration of said additive in the absorbent material or non-structural filler.

Additionally, it has been observed that, if the foam of the material exhibits a gradient in the concentration of additives, namely metallic filaments or carbon fibre, the reduction in reflectivity of the material may be greater. Thus, in a preferred embodiment, the absorbent polymeric material exhibits a gradient in the distribution of the concentration of additives within the foam of the material.

In a preferred embodiment, the foam may be designed to be flexible. This capability enables the resulting material to be used in spaces or cavities of limited accessibility. Alternatively, it may be designed in a rigid form. An absorbent material comprising a rigid foam may serve as a structural support.

Thus, in a second embodiment, the solution relates to a non-structural filler. Said non-structural filler comprises a non-structural polymeric foam associable with a structural element. The foam comprises inclusions of metallic filaments or carbon fibre configured to absorb electromagnetic radiation.

In non-structural implementations, the polymeric foam may additionally be selected from silicone-based materials, instead of the foams described in the previous examples. When silicones are used as a non-structural filler, it has been observed that filaments having a length of less than 1 mm may be employed. In this case, filaments having a length of approximately 0.1 mm may be used.

Thus, in a further embodiment, there is provided an absorbent coating. Said coating is formed by a composite material comprising glass fibre and resin as a structural element. The coating further comprises a non-structural absorbent filler as described above.

The arrangement of the filler is determined by the final application of the absorbent coating. In a particular embodiment, the non-structural filler is arranged between the structural element and the incident electromagnetic radiation. Alternatively, the coating may have an arrangement wherein the structural element is disposed between the non-structural filler and the incident electromagnetic radiation.

In particular, the structural element may be a composite material comprising glass fibre and a resin. The glass fibre and resin composite of the fuselage may have a thickness of between 1 and 5 mm, functioning as a semi-transparent structural element or active layer, thereby enhancing destructive interference. For this to occur, the permittivity values of the glass fibre must be in the range of 1.5 to 10 for the real part of the permittivity, which are typical values, for example, in the aeronautical sector.

The resin is a conventional resin used in the aeronautical, marine or civil engineering sectors. Examples of such resins include epoxy and polyester resins, among others. In this case, the inclusion of metallic or carbon fibres in the outer laminate forming the composite structure is envisaged. The inclusion of the additives, whether metallic or carbon fibres, is carried out between two plies of glass fibre, pre-impregnated or not with resin. This results in a local increase in dielectric permittivity, leading to compression of the incident electromagnetic wave. In a particular embodiment of the coating, the concentration of filaments ranges from 0.1 to 20% by weight of the resin used, preferably from 0.5 to 10%, depending on the final density of the material.

As indicated above, in the aeronautical sector, the use of a filler as described enables the inhibition of the detection of a metallic or reflective material within the fuselage. Said filler may be arranged beneath the glass fibre in order to inhibit the detection of a metallic or reflective material within the fuselage.

In an even more preferred embodiment, the absorbent polymeric material may comprise additional additives, in addition to the filaments used, which enable further optimisation. Thus, a magnetic material, preferably in powder form, may be used as an additional additive. The particle size is in the order of hundreds of nanometres to a few micrometres. In a particular embodiment, the particle size is in the range of 0.2 to 5 micrometres. Its inclusion smooths the ripple inherent to destructive interference and enhances pure absorption, thereby achieving substantially constant attenuation over the frequency range of interest.

Additionally, the material may comprise, as further additives, short glass fibre filaments in order to confer improved mechanical properties on the material.

On the other hand, the material may further comprise, as additional additives, short aramid fibres in order to improve the abrasion resistance of the material.

Similarly, the material may further comprise other additional additives, such as flame retardants, including hydrated alumina, brominated retardants, or others commonly used, in order to confer flame-retardant or intumescent properties on the absorbent polymeric material.

Another additional additive that may be used in the absorbent polymeric material is a thermal destruction agent, for example aluminium powder, preferably fine, or other reactive elements. This thermal destruction agent may be used to promote the degradation of the material when subjected to high temperatures, where required.

Finally, the method for producing the absorbent polymeric material is a simple and cost-effective mixing process. The method comprises mixing the polymeric foam with the metallic or carbon fibre filaments. Additionally, it may comprise the addition of other additives.

The mixing must be such that it does not result in agglomeration of the filaments. To this end, the mixing may comprise the use of mixers, whether manual or mechanical, such as spatula-type or helical mixers, preferably having a diameter of at least twice the length of the fibres used. In this manner, entanglement of the fibres is avoided. Additionally, depending on the type of filaments used, chemical dispersants may be employed to facilitate homogeneous mixing.

Once mixed, the polymeric foam with filaments may be poured into a silicone mould in order to form a part having the desired thickness or geometry. The forming of the part may be carried out with or without thermal control, depending on the final product to be obtained.

Therefore, as described above, the absorbent polymeric material may be provided in planar form, as a covering or coating for reflective elements, or with specific geometries, owing to its flexibility. It is well known in the aeronautical sector that one of the most reflective elements are the leading edges of wings. The profile of such designs is dictated by aerodynamic requirements, and it is therefore not straightforward to confer a specific stealth geometry. Given the small thickness of a leading edge relative to its length, its associated reflectivity may be higher compared with an equivalent surface of a different geometry due to diffraction and edge effects at the frequencies of interest.

In this case, the inclusion of a material as described above in the profile of the leading-edge results in a significant reduction in the reflectivity of the assembly. Therefore, the present invention improves the behaviour of the assembly, resulting in a significant improvement in the sector.

## Claims

1. Absorbent polymeric material, **characterised in that** it comprises a polymeric foam and inclusions of metallic filaments or carbon fibre configured to absorb incident electromagnetic radiation.

2. The absorbent polymeric material according to claim 1, wherein the polymeric foam forms a structural core comprised in a multilayer structural element, and at least one layer of the structural element comprises the filament inclusions configured to absorb electromagnetic radiation.

3. The absorbent polymeric material according to claim 2, wherein the filament inclusions are comprised in the polymeric foam structural core.

4. The absorbent polymeric material according to any one of claims 1 to 3, wherein the filaments have a length of between 0.1 and 50 mm, preferably between 1 and 50 mm, and more preferably between 3 and 30 mm.

5. The absorbent polymeric material according to any one of claims 1 to 4, wherein the filaments have a ratio between filament length and wavelength of the incident radiation (λ/l) of between 1 and 100.

6. The absorbent polymeric material according to any one of claims 1 to 5, wherein the concentration of filaments is between 0.01 and 10% by weight of the foam.

7. The absorbent polymeric material according to any one of claims 1 to 6, wherein the polymeric foam has a thickness of at least 5 mm.

8. The absorbent polymeric material according to any one of claims 1 to 7, wherein the polymeric foam further comprises a magnetic additive in powder form.

9. An absorbent filler, **characterised in that** it comprises an absorbent polymeric material according to claim 1.

10. The absorbent filler according to claim 9, wherein the filler comprises a non-structural polymeric foam associable with a structural element, wherein the non-structural foam comprises inclusions of metallic filaments or carbon fibre configured to absorb electromagnetic radiation.

11. An absorbent coating, **characterised in that** it comprises a structural element comprising a composite material of glass fibre and resin, and a non-structural absorbent filler according to any one of claims 9 to 10 associated with said structural element.

12. The coating according to claim 11, wherein the non-structural filler is arranged between the structural element and the incident electromagnetic radiation.

13. The coating according to claim 11, wherein the structural element is arranged between the non-structural filler and the incident electromagnetic radiation.

14. The coating according to any one of claims 11 to 13, wherein la the concentration of filaments is between 0.1 and 20% by weight of the resin used.

15. A method for producing a part comprising the absorbent polymeric material according to claim 1, the method comprising the steps of:
- mixing a polymeric foam with inclusions of metallic filaments or carbon fibre;
- pouring the resulting mixture into a silicone mould;
- forming the absorbent part.
